# EUROPÄISCHE PATENTSCHRIFT

(11) **EP 2 104 836 B1**
(45) Veröffentlichungstag und Bekanntmachung des Hinweises auf die Patenterteilung: **31.10.2018**
(21) Anmeldenummer: 07819743.1
(22) Anmeldetag: 10.11.2007
(51) Int. Cl.: G01P 1/00, G01P 1/02, H01B 7/18, G01D 11/24

(54) **VORRICHTUNG MIT EINEM SENSOR UND KOPPELMITTELN**
DEVICE COMPRISING A SENSOR AND COUPLING MEANS
DISPOSITIF DOTÉ D'UN CAPTEUR ET DE MOYENS DE COUPLAGE

(30) Priorität: 21.12.2006 DE 102006060648
(43) Veröffentlichungstag der Anmeldung: 30.09.2009
(73) Patentinhaber: WABCO GmbH, 30453 Hannover (DE)
(72) Erfinder: HÖFLER, Siegfried, 30165 Hannover (DE); SINGBARTL, Günther, 30161 Hannover (DE)
(74) Vertreter: Lauerwald, Jörg
(86) Internationale Anmeldenummer: PCT/EP2007/009751
(87) Internationale Veröffentlichungsnummer: WO 2008/083785

(56) Entgegenhaltungen:
- EP-A- 0 465 978
- EP-A- 0 571 129
- DD-A1- 229 242
- US-A- 5 969 229
- US-A1- 2004 246 685

## Beschreibung

Die Erfindung betrifft eine Vorrichtung mit einem Sensor oder Aktuator mit Koppelmitteln zum elektrischen und mechanischen Kontaktieren des Sensors oder Aktuators.

Bei Kraftfahrzeugen, insbesondere bei Lastkraftfahrzeugen, ist heutzutage eine Vielzahl unterschiedlicher Sensoren und Aktuatoren verteilt angeordnet. Diese müssen in der Regel zum Betrieb über elektrische Leitungen mit einer Steuerungs- und Auswerteelektronik verbunden werden. Die elektrischen Leiter, welche zum Anschließen der Sensoren und Aktuatoren eingesetzt werden, sind je nach Art und Position des Sensors oder Aktuators einer hohen mechanischen Belastung ausgesetzt. Dies betrifft insbesondere den Bereich der Kontaktierung zwischen der elektrischen Leitung und dem Gehäuse der Sensoren oder Aktuatoren, da dort der von außen kommende elektrische Leiter mit den internen Komponenten der Sensoren/Aktuatoren elektrisch und mechanisch gekoppelt werden muss. Im Bereich der Kontaktierung treten neben den mechanischen Belastungen durch Biegen der Anschlussleitungen auch thermische Belastungen aufgrund spezifischer lokaler Wärmegradienten und eines unterschiedlichen Ausdehnungsverhaltens der verschiedenen Materialien auf.

Bekannte Lösungen sehen beispielsweise eine hochfeste Kupferleitung vor, deren mechanische und thermische Eigenschaften ohne weitere Maßnahmen für manche Anwendungen noch nicht ausreichend ist. Andere Lösungen sehen deshalb reine Stahlleitungen aus einer Sonderlegierung vor, welche jedoch verhältnismäßig teuer in der Herstellung sind.

US 5,969,229 offenbart ein Anschlusskabel für einen Sensor mit einer Leitereinheit, die aus rostfreien Stahldrähten und Kupferdrähten besteht. Durch Einstellen des Querschnitts-Prozentanteils der rostfreien Stahldrähte in der Leitereinheit innerhalb eines Bereichs von 30 bis 70% erhält man ein Anschlusskabel mit einem geringen elektrischen Widerstand und einer hohen Flexibilität, Zugfestigkeit sowie Elastizität. Hinsichtlich der Härte und der Hitzebehandlung der rostfreien Stahldrähte werden bevorzugte Werte angegeben. Die Kupferdrähte werden vorzugsweise mit einer Antioxidationsschicht überzogen. Das Anschlusskabel kann Hybriddrähte aufweisen, die miteinander verseilt sind und durch integrales Ausformen oder Ausbilden von rostfreiem Stahl und Kupfer hergestellt werden. Vorzugsweise wird das Anschlusskabel mit einem isolierenden Mantelmaterial wie beispielsweise Teflon-Harz beschichtet.

Ein anderes Anschlusskabel für einen Sensor ist aus DD 229 242 bekannt.

EP 0 571 129 A1 offenbart einen magnetischen Sensor variabler Reluktanz mit einer Spule, umfassend einen Trommelteil, der eine Ausnehmung aufweist, ein nominales Frontende, einen Frontflansch; ein Polstück, das in der Ausnehmung angeordnet ist; einen Magneten im Bereich des Polstückes; eine elektrische Wicklung, die um den Trommenteil herum gewickelt und elektrisch an einen Ausgangsleiter angeschlossen ist, um ein elektrisches Signal an eine Ausgangsvorrichtung zu übertragen; und eine äußere Hülse, die die Spule umgibt, wobei der Magnet an der Spule vor dem Polstück und dem Frontflansch befestigt ist, und die Hülse einen offenen Endteil mit einer inneren Schulterfläche und einen Frontteil mit einer Frontwand mit einer Öffnung im Bereich des Magneten aufweist, damit der Magnet hindurchragen kann, dass eine elastomere Frontdichtung zwischen dem Frontflansch und dem Frontendteil komprimiert ist, um die elektrische Wicklung gegen durch die Öffnung strömendes Medium abzudichten, und zum Abdecken des offenen rückwärtigen Endteiles der Hülse ein rückwärtiges Teil vorgesehen ist, das an einer Fläche des rückwärtigen Endteiles der äußeren Hülse mittels Ultraschall angeschweißt ist, um die elektrische Wicklung gegen strömendes Medium durch den rückwärtigen Endteil abzudichten.

EP 0 465 978 A1 offenbart einen elektrischen Leiterdraht zur Verwendung in Kraftfahrzeugen, hergestellt durch miteinander Verdrillen von einer Anzahl von Einzeldrähten, wobei die Einzeldrähte vor dem Verdrillen eine Zugfestigkeit von 80 bis 160kgf/mm² und eine Leitfähigkeit von 25 bis 80% IACS haben und einen Kern aufweisen, der aus Stahl hergestellt ist, welcher 0,15 bis 0,85% Kohlenstoff enthält, wobei der Leiterdraht eine Gesamtquerschnittsfläche von 0,05 bis 0,30mm² hat, und jeder der Einzeldrähte eine Oberflächenschicht aufweist, die aus sauerstofffreiem Kupfer besteht.

Es ist daher eine Aufgabe der vorliegenden Erfindung, günstige, robuste und beständige Vorrichtungen mit Sensoren bzw. Aktuatoren bereitzustellen, welche insbesondere gegen thermischen Belastungen widerstandsfähiger sind als bekannte Lösungen.

Die Aufgabe wird erfindungsgemäß von einer Vorrichtung gelöst, welche einen Sensor oder Aktuator und Koppelmittel zum elektrischen und mechanischen Ankoppeln des Sensors oder Aktuators umfasst, wobei die Koppelmittel einen elektrischen Einzelleiter mit einem Kern aus einem ersten Material und einem Mantel aus einem zweiten Material umfassen und das erste Material eine geringere thermische Leitfähigkeit besitzt als das zweite Material. Durch eine derartige Kopplung des elektrischen Sensors oder Aktuators mittels eines elektrischen Leiters wird der Sensor oder Aktuator den thermischen Verhältnissen, wie sie bei zahlreichen Anwendungen, aber insbesondere z.B. in Kraftfahrzeugen herrschen, deutlich besser gerecht als herkömmliche Lösungen. Der Einzelleiter kann dabei ein Massiveinzelleiter (z.B. Draht) sein, oder ein einzelner Leiter einer Litze, wobei dann typischerweise die Litze aus einer Mehrzahl der erfindungsgemäßen Einzelleiter besteht. Entsteht in Komponenten in der Nähe des Sensors oder Aktuators Wärme, so wird diese z.T. über angrenzende Komponenten und die umgebende Luft auf den Sensor oder Aktuator abgeleitet. Ein beträchtlicher Anteil der Wärme wird jedoch auch über den Kabelbereich, also die mechanischelektrische Kopplung, eingeleitet. Dieser Wärmefluss über die elektrische Zuleitung kommt noch zu den bereits im Sensor und ggf. Kuppelmittel auftretenden - u.U. hohen - Temperaturen hinzu. Typischerweise wird während der Fahrt des Fahrzeugs, durch von der Fahrt und der Bewegung von Umgebungskomponenten verursachte Luftströmungen, eine Kühlung der Komponenten bewirkt. Kommt das Fahrzeug zum Stillstand, nimmt der kühlende Luftstrom ab und es können kurzzeitig Spitzen bei der Wärmebelastung der Komponenten auftreten. Dieser Anstieg der Temperaturen kann durchaus länger anhalten. Insbesondere im Bereich der Bremsen von Kraftfahrzeugen und Anhängerfahrzeugen ist der Wärmeeintrag beachtlich. Die erfindungsgemäße Kopplung des Sensors bzw. Aktuators mittels eines elektrischen Leiters mit einem Kern aus einem ersten Material, welches eine geringere Wärmeleitfähigkeit aufweist, bietet hier gegenüber herkömmlichen Lösungen deutliche Vorteile. Der Wärmeeintrag über das Kabel, also die elektrische Kontaktierung, ist bei der erfindungsgemäßen Lösung deutlich reduziert. Durch die Verbesserung der Temperatureigenschaften wird auch eine Reduktion der mechanischen Belastung bewirkt. Die ausreichende elektrische und mechanische Kopplung ist natürlich nach wie vor zu gewährleisten.

Der Sensor ist für den Einsatz als Sensor in einem Antiblockiersystem, zum Sensieren der Drehgeschwindigkeit von Rädern ausgestaltet. Gerade bei dieser Anwendung für einen erfindungsgemäßen Sensor treten, wie oben beschrieben, sehr hohe Temperaturspitzen auf, welche die erfindungsgemäße Ausgestaltung besonders vorteilhaft machen.

Bei der erfindungsgemäßen Vorrichtung ist das erste Material des elektrischen Leiters in Form eines Innenleiters ausgebildet, welches im Wesentlichen einen kreisrunden Querschnitt aufweist und das zweite Material als Außenleiter ausgebildet ist, welches den Innenleiter umschließt. Dies betrifft im Wesentlichen die Ausgestaltung als Litze oder Massiveinzelleiter in einem Kabel. Wird dieses Kabel mit dem Sensor in der oben erläuterten Weise gekoppelt, um es so mit den weiteren Komponenten mechanisch und elektrisch zu verbinden, entsteht der erfindungsgemäße Vorteil. Das Verhältnis des Innenradius des Innenleiters zur Stärke des Außenleiters ist zwischen 10:1 und 1000:1, dann werden mechanische, thermische und elektrische Eigenschaften vorteilhaft abgeglichen. Weder der Kern noch der Mantel sollten also zu dünn sein, wobei der Mantel deutlich weniger Materialstärke aufweisen kann als der Kern.

Gemäß einem weiteren vorteilhaften Aspekt der vorliegenden Erfindung weist das erste Material eine höhere mechanische Stabilität auf, als das zweiter Material. Durch eine derartige Vorrichtung wird sichergestellt, dass die mechanische Stabilität gegeben ist, indem ein hochstabiler mechanischer Kern, z.B. aus Stahl, vorgesehen ist. Dieser wird von einem zweiten Material, wie z.B. Kupfer oder Kupferlegierungen, in Form eines Mantels umgeben, welcher aufgrund geringer Stabilität eine verbesserte Kontaktierbarkeit nach außen sicherstellt. Bei einem geeigneten Größenverhältnis des Kerns zum Mantel lassen sich die Kosten für den elektrischen Kontakt gering halten. Für die Kontaktierung kann gemäß diesem Aspekt der vorliegenden Erfindung eine elektrische Leitung auf Ihrer ganzen Länge einen entsprechenden Kern aus mechanisch hochbelastbarem Material aufweisen und ebenfalls über die ganze Länge mit dem Mantel aus hochleitfähigem und kostengünstigerem Material umgeben ist. Alternativ können auch nur kürzere Abschnitte des elektrischen Leiters mit einem Kern aus dem mechanisch robusteren Material vorgesehen sein. Die übrigen Abschnitte des Leiters können aus dem mechanisch weniger robusten zweiten Material oder einem dritten Material mit völlig anderen Eigenschaften ausgeführt sein, soweit die entsprechende Anwendung dies zulässt. Hierdurch können Kosten eingespart werden. Natürlich können auch entsprechende Leiterstücke eines Leiters mit Kern gemäß der vorliegenden Erfindung mit herkömmlichen Leitern gekoppelt werden. Vorteilhaft ist eine Kombination der mechanischen Eigenschaften mit den zuvor erläuterten Wärmeausbreitungseigenschaften des Kerns und des Mantels.

Gemäß einem weiteren, vorteilhaften Aspekt der vorliegenden Erfindung weist das erste Material ebenfalls einen geringeren Ausdehnungskoeffizienten auf. Hierdurch werden Spannungen und Verschiebungen in der elektrischen Kontaktierung verringert.

Vorteilhaft ist der Sensor oder Aktuator mindestens teilweise mit einer Umspritzmasse zur Erhöhung der mechanischen Stabilität der Kopplungsmittel umgeben. Hierdurch wird die mechanischen Robustheit weiter erhöht.

Gemäß einem ebenfalls vorteilhaften Aspekt der vorliegenden Erfindung weist die Vorrichtung ein Kupplungselement, insbesondere eine Kupplungsdose, eine Kupplungsbuchse oder eine Kupplungsstecker zum elektrischen und mechanischen Koppeln des elektrische Leiters mit einer Elektronik für den Betrieb des Sensors oder Aktuators auf. Da erfindungsgemäß der elektrische Leiter zwischen Sensor oder Aktuator und Kupplungselement mit einem Kern eines Materials ausgestattet ist, welcher eine geringere Wärmeleitfähigkeit aufweist wird die Wärmeübertragung zu dem Kupplungselement und zu den unter Umständen thermisch anfälligen Kontaktierungen reduziert. Da üblicherweise diese Kupplungselemente, die als Kupplungsdose, Buchsen, Stecker etc. ausgeführt sein können, nur für thermisch geringere Belastungen ausgelegt sind, wirkt sich die niedrigere Wärmeleitfähigkeit hier besonders vorteilhaft aus.

Gemäß einem weiteren vorteilhaften Aspekt der Erfindung weist der Kern eine um ca. den Faktor 7 niedrigere Wärmeleitfähigkeit als der Mantel auf. Gemäß einem weiteren, vorteilhaften Aspekt der Erfindung besteht die elektrische Kontaktierung aus einer Litze mit einer festen Anzahl von Einzelleitern, von denen jeder eine Stärke von etwa 0,2 mm nicht übersteigt. Vorteilhaft ist eine durchschnittliche Stärke eines Einzelleiters von etwa 0,185 mm, wobei jeder der Leiter hauptsächlich aus Stahl besteht und eine dünne Schicht Kupfer als Mantelfläche aufweist.

Die Aufgabe wird ebenfalls erfindungsgemäß von einer elektrischen Kontaktierung zum Ankoppeln eines elektrischen Leiters an ein Kontaktelement eines Sensors oder Aktuators gelöst, wobei im Bereich der elektrischen Kontaktierung ein Kern aus einem ersten Material und ein Mantel aus einem zweiten Material vorgesehen ist und das erste Material einen geringere thermische Leitfähigkeit aufweist und mechanisch belastbarer ist als das zweite Material. Der erfindungsgemäße Vorteil kann insoweit bereits durch eine vorteilhafte Ausgestaltung einer Kontaktierung erreicht werden, welche vorgesehen ist, um mit einem Sensor oder Aktuator gekoppelt zu werden. Insbesondere kann bei einigen Anwendungen eine große räumliche Ausdehnung in Längsrichtung eines elektrischen Leiters mit einem Kern und einem Mantel, wie zuvor beschrieben, nicht erforderlich sein. Stattdessen werden die Vorteile der Erfindung bereits durch einen verhältnismäßig kurze Kontaktierung erreicht.

Eine weitere vorteilhafte Erhöhung der mechanischen Stabilität ergibt sich durch Umspritzen der elektrischen Kontaktierung mit einer Umspritzmasse.

Die Ausführungsbeispiele der vorliegenden Erfindung werden anhand der Figuren beispielhaft beschrieben. Es zeigt:
- Fig. 1: eine Draufsicht auf eine erfindungsgemäße Ausgestaltung einer Vorrichtung gemäß der vorliegenden Erfindung,
- Fig. 2: eine vereinfachte Schnittdarstellung durch einen beispielhaften Sensor für die vorliegende Erfindung,
- Fig. 3: eine vereinfachte Schnittdarstellung durch den elektrischen und mechanischen Anschlussbereich eines beispielhaften Sensor für die vorliegende Erfindung, und
- Fig. 4: (a) eine vereinfachte Schnittdarstellung durch einen elektrischen Einzelleiter zur Bereitstellung einer elektrischen Kontaktierung gemäß einem Ausführungsbeispiel der vorliegenden Erfindung und (b) vereinfachte Schnittdarstellung durch einen elektrischen Leiter gemäß einem Ausführungsbeispiel der vorliegenden Erfindung.

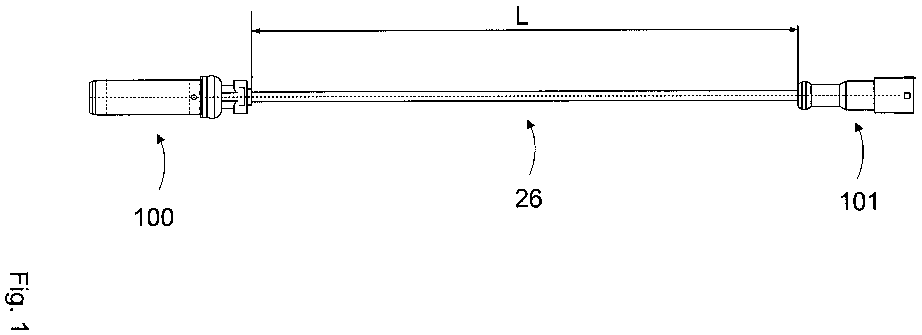

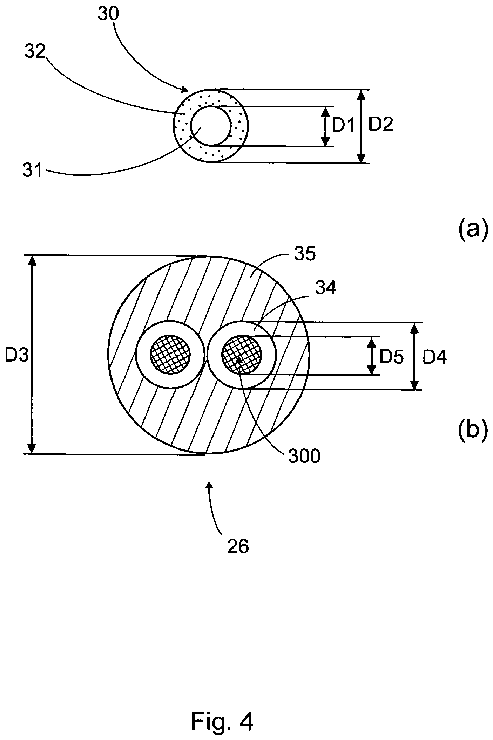

Fig. 1 zeigt eine vereinfachte Darstellung einer Vorrichtung, welche gemäß einem vorteilhaften Aspekt der vorliegenden Erfindung ausgestaltet ist. Ein beispielhaft gezeigter Sensor 100 ist mittels Koppelmitteln mit anderen Komponenten zum Befestigen, Auslesen und Betreiben des Sensors verbunden. Die Koppelmittel umfassen einen elektrischen Leiter 26 und Kuppelmittel 101, wie beispielsweise einen Stecker, eine Buchse oder Dose. Der elektrische Leiter 26 umfasst erfindungsgemäß einen oder mehrere Einzelleiter (die näher in Fig. 4 beschrieben werden), welche einen Kern aus einem ersten Material (z.B. in Form eines Innenleiters) und einen Mantel aus einem zweiten Material (z.B. in Form eines Außenleiters) aufweisen. Vorteilhaft können sowohl Litzen als auch Massiveinzeldrähte verwendet werden. Entsprechend weist entweder der Einzeldraht einer Litze oder der ganze Massiveinzeldraht den Kern aus dem ersten und den Mantel aus dem zweiten Material auf. Das erste Material hat dabei erfindungsgemäß eine geringere Wärmeleitfähigkeit als das zweite Material des Mantels. Insgesamt erhält der elektrische Leiter dadurch eine geringere Wärmeleitfähigkeit als bei herkömmlichen Lösungen, bei denen der Draht aus einem einzigen Material (z.B. Cu) besteht. Als Materialien kommen erfindungsgemäß z.B. Stahl für den Kern und Kupfer für den Mantel in Betracht. Herkömmliche Lösungen bestehen typischerweise aus reinem Kupfer. Durch die geeignete Materialauswahl für den Kern und den Mantel wenigstens auf einem Abschnitt der Länge L der Koppelmittel (wie bspw. den elektrischen Leiter 26) wird erreicht, dass die Ausbreitung der Wärme im Sensor 100, dem elektrischen Leiter 26 und dem Anschlusselement 101 vorteilhaft reduziert wird. Die Länge kann für den Einsatz in einem Antiblokkersystem vorteilhaft etwa 20 oder 50 cm und mehr betragen. So wird beispielsweise Wärme, welche im elektrischen Leiter 26 eingebracht wird, nicht in gleicher Weise zum Kupplungselement 101 und zum Sensor 100 übertragen. Das ist insbesondere deshalb vorteilhaft, weil derartige Kupplungselemente 101 häufig nur für geringere Temperaturen ausgelegt sind, als die anderen Komponenten. Ein weiterer vorteilhafter Aspekt der vorliegenden Erfindung ist dann zu erzielen, wenn der Kern aus dem ersten Material eine höhere mechanische Stabilität aufweist als der Mantel aus dem zweiten Material. Für Stahl (Kern) und Kupfer (Mantel) werden sowohl die vorteilhafte geringere Wärmeleitfähigkeit als auch die verbesserte mechanische Stabilität erreicht. Auch die Ausdehnungskoeffizienten der beiden genannten Materialien wirken sich günstig aus und schließlich ist auch die erhöhte Leitfähigkeit eines Mantels aus Kupfer vorteilhaft. Bei Leitern aus Stahl und Kupfer sind also gleich mehrere Vorteile gegeben, wobei jeder der genannten Aspekte, also Wärmeleitfähigkeit, mechanische Belastbarkeit, Ausdehnungsverhalten und elektrische Leitfähigkeit einen eigenen vorteilhaften Beitrag leistet und mehrere der Aspekte, z.B. gerade bei ABS Sensoren, synergetisch vorteilhaft zusammenwirken.

Die vorteilhaften Aspekte werden nachfolgend nochmals für einen ABS (Automatic Brake System) Sensor 100 beschrieben. Bei einem Bremsvorgang wird Wärme im Bereich des Sensors 100 und im Kabelbereich 26 eingeleitet. Die von den Bremsen erzeugte Wärme tritt länger andauernd und kurzzeitig auf, je nach Betätigung der Bremsanlage. Die höchsten Temperaturen sind nach einer längeren Talfahrt mit Bremsphasen und einem anschließenden Stillstand des Fahrzeugs, zu verzeichnen. In einer derartigen Situation entfällt der kühlende Fahrtwind plötzlich, und es kommt zu einem vorübergehenden starken Anstieg der Temperaturen, welcher einige Minuten und sogar bis zu 20 Minuten anhalten kann. Gerade in dieser Situation wirkt sich die um etwa einen Faktor 7 niedrigere Wärmeleitfähigkeit des Stahls gegenüber herkömmlichen Kupferleitungen sehr vorteilhaft aus, weil der Wärmeeintrag über das Kabel in den ABS-Sensor, d.h., genauer gesagt in die empfindliche Spule bzw. die sensiblen Kontaktierungen des Sensors, deutlich reduziert wird. Dieser Wärmefluss über die elektrische Zuleitung 26 tritt noch zu den bereits im Sensor auftretenden hohen Temperaturen hinzu, was der vorteilhaften Ausgestaltung des Sensors gemäß der vorliegenden Erfindung eine hohe Bedeutung zukommen lässt. Der in Fig. 1 dargestellte Sensor weist für die drei dargestellten Komponenten, nämlich den Sensor 100, die Kupplungsvorrichtung 101 und den elektrischen Leiter 26, verschiedene Anwendungs- und damit Temperaturbereiche auf. Innerhalb des Sensors 100 wird nach Dauertemperaturen von z.B. -40 .. +150°C und einer Kurzzeittemperatur von +180°C unterschieden, für welche der Sensor 100 ausgelegt werden muss. Der Begriff "Kurzzeit" bezeichnet hierbei etwa eine Stunde. Im Bereich von Lastkraftwagen wird der elektrische Leiter 26 häufig höher spezifiziert, d.h. mit einer Dauertemperatur von +180°C und +220°C im Kurzzeitbetrieb. Dies liegt darin begründet, dass der elektrische Leiter 26 oftmals in der Nähe der Bremsscheibentrommeln verlegt werden muss. Die zugelassenen thermischen Anwendungsbereiche des elektrischen Kupplungselementes 101 liegen häufig vergleichsweise niedriger, nämlich im Bereich von -40°C .. +80°C. Das ist darin begründet, dass diese Kupplungselemente normalerweise außerhalb der Bereiche angeordnet sind, in denen höherer Temperaturen auftreten bzw. erzeugt werden. Erfindungsgemäß wurde jedoch erkannt, dass die Wärmeübertragung über den elektrischen Leiter 26 an die Kupplungsvorrichtung 101 und dadurch auch auf weitere thermisch anfälligere Bestandteile des Fahrzeuges einen schädigenden Einfluss haben kann, weil die thermische Grundauslegung dieser Elemente geringer ist. Im Allgemeinen werden also sowohl beim Sensor 100 als auch bei einer elektrischen Kontaktierung als solcher aufgrund der niedrigeren Wärmeleitfähigkeit und der höheren mechanischen Belastbarkeit geringere thermische Belastungen bei den kurzzeitig von außen auftretenden Temperaturspitzen bewirkt. Dadurch wird auch die mechanische Belastung der erfindungsgemäßen Vorrichtung mit einem Sensor 100 bzw. der erfindungsgemäßen elektrischen Kontaktierung verringert. Schließlich wirken sich auch die unterschiedlichen und insgesamt geringeren Ausdehnungskoeffizienten des Stahls ergänzend positiv auf die Kontaktierung aus, weil relative Spannungen und Verschiebungen innerhalb der elektrischen Kontaktierung bzw. innerhalb des elektrischen Leiters 26 gemindert werden. Letztlich wirkt sich die höhere Leitfähigkeit der Kupferschicht im Bezug auf die elektrische Leitfähigkeit der Gesamtanordnung positiv aus. Eine vorteilhafter Wert des elektrischen Längenwiderstand von 80 bis 90 Ohm/km kann auf diese Weise erreicht werden.

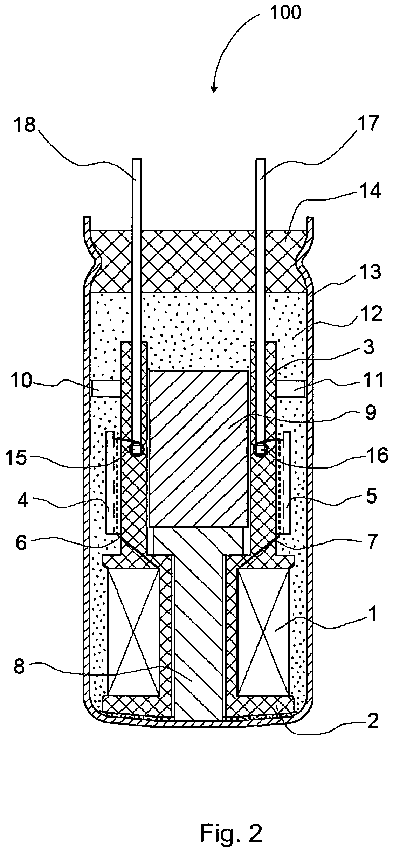

Fig. 2 zeigt eine Schnittdarstellung durch einen Sensor 100, der beispielhaft herangezogen wird, um die elektrische Kontaktierung gemäß einem Ausführungsbeispiel der Erfindung zu erläutern. Der Sensor 100 weist eine elektrische Spulenbaugruppe 1, 2, 3 mit einem Spulenkörper 2 auf, auf den eine elektrische Spulewicklung 1 aus Draht gewickelt ist. Ein erstes und ein zweites Drahtende 6, 7 ist aus der Spulenwicklung 1 heraus zu elektrischen Anschlussstellen 15, 16 geführt und dort mit diesen Anschlussstellen elektrisch verbunden, beispielsweise verlötet oder verschweißt. Die Anschlussstellen 15, 16 sind elektrisch mit Anschlusselementen 17, 18 verbunden, bzw. einstückig damit ausgebildet. Die Anschlusselemente 17, 18 dienen zur elektrischen Ankopplung des Sensors mit einer elektronischen Auswerteeinheit, z.B. mit dem Steuergerät eines Antiblokkiersystems (ABS). Die Anschlusselemente 17, 18 sind beispielsweise aus Blechstreifen oder Vierkantdraht hergestellt. Weiter sind Führungselemente 4, 5, die zur Befestigung und Führung des aus der Spulenwicklung 1 herausgeführten Drahtendes dienen, dargestellt. Innerhalb der Spulenbaugruppe 1, 2, 3 ist ein Permanentmagnet 9 sowie ein abgestufter Polstift 8 aus magnetisch gut leitfähigem Material angeordnet. Die zuvor beschriebenen Bauelemente des Sensors sind bei der Herstellung des Sensors in einem speziellen Umspritzwerkzeug mit einer Umspritzmasse 12 umspritzt worden. Als Umspritzmasse kann vorteilhaft ein Thermoplast, insbesondere ein Polyamid-Material, verwendet werden. Die Umspritzung 12 hat den Vorteil, dass die umspritzten Bauteile besser gegen mechanische Beschädigungen und Feuchtigkeit geschützt sind als ohne Verwendung der Umspritzung. Eine weitere Erhöhung der mechanischen Festigkeit kann durch Verwendung von Umspritzmassen erzielt werden, die Glaskugelverstärkt und/oder alternativ Glasfaser-verstärkt sind. Insbesondere durch die Glasfaser-Verstärkung ist eine weitere wesentliche Erhöhung der mechanischen Stabilität möglich. Die Umspritzung hat den weiteren Vorteil, dass der Polstift 8 sowie der Permanentmagnet 9 hierdurch fixiert werden. Die solchermaßen umspritzte Baueinheit ist in einem topfartigen Gehäuse 13 angeordnet. Das Gehäuse 13 kann beispielsweise als Tiefziehteil aus Metall ausgebildet sein. Das Gehäuse 13 ist durch ein Verschlussstück (nicht dargestellt), das formschlüssig in das einseitig offene Gehäuse 13 eingepresst ist, feuchtigkeitsdicht verschlossen. Weiter sind Barrieren 10, 11 vorgesehen, die zwischen dem aus der Spulenwicklung 1 herausgeführten Drahtende 6, 7 und der Einspritzstelle der Umspritzmasse 12 beim Umspritz-Vorgang angeordnet sind. Die Barrieren bewirken eine Ablenkung der Fließrichtung der Umspritzmessmasse, die hier nicht näher erläutert wird. Bei Sensoren, wie dem in Fig. 1 dargestellten, ist das Gehäuse in der Regel ein topfartiges Stahlgehäuse, welches stirnseitig den Bereich der umspritzten empfindlichen Sensorteile, wie z.B. Spule, Körper, Polstift, Magnet etc., schützend umschließt. Beim Umgießen kommt ebenfalls ein Umgießen mit spannungsarmem Gießharz (Low Stress) in Betracht.

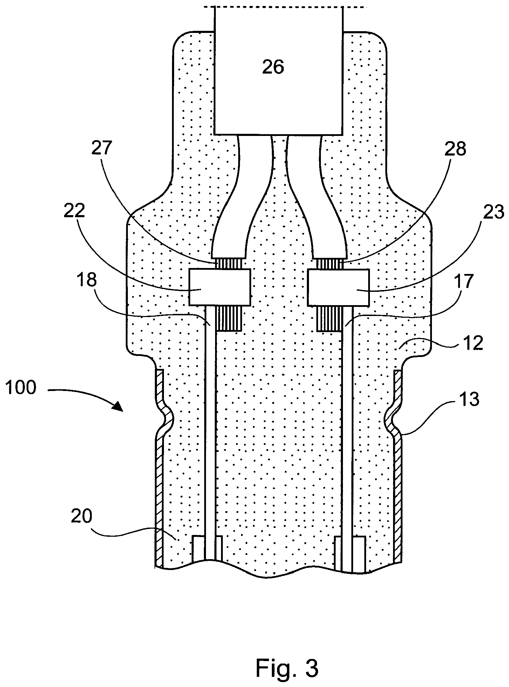

Fig. 3 zeigt nun eine vorteilhafte Ausgestaltung einer elektrischen Kontaktierung des Sensors gemäß Fig. 2 im Detail gemäß einem Ausführungsbeispiel der vorliegenden Erfindung. Die elektrische Kontaktierung dient dazu, einen elektrischen Leiter 26 mit einem Sensor 100 gemäß Figuren 1 und 2, der beispielhaft für eine Vielzahl von Sensoren oder Aktuatoren steht, elektrisch und mechanisch zu kontaktieren. Der elektrische Leiter 26 ist in dem oberen Bereich des Sensors 100 mit den Kontaktelementen 22, 23 elektrisch und mechanisch verbunden. Eine mögliche Verbindungstechnik ist ein Crimpkontakt, bei welchem die Enden des elektrischen Leiters 26, 27, 28 mit den Kontaktelementen 22, 23 durch Quetschen verbunden werden. Die Anschlusselemente 17, 18 stellen die weitere Kontaktierung zur Spule bzw. zum Spulendraht her. Die Anschlusselemente 17, 18 können z.B. aus Kupfer, Stahl, Aluminium oder auch einem anderen elektrisch leitfähigen Material hergestellt sein. Die Verbindungen, d.h. die Enden 27, 28 des elektrischen Leiters 26, die Kontaktelemente 22, 23 und die zweiten Kontaktelemente 17, 18 sind von einer durch Umspritzen aufgebrachten Kunststoffumhüllung 20 umgeben. Die Leiterenden 27, 28 des elektrischen Leiters 26 sind erfindungsgemäß als kupferummantelte Stahllitze (auch bekannt als CCS = Copper Cladded Steel) ausgeführt. Die Kombination der Kontaktelemente 22, 23 mit der CCS-Litze im Anschlussbereich des elektrischen Leiters 26 ermöglicht vorteilhaft die erfindungsgemäße mechanisch und thermisch stabile Kontaktierung zwischen dem Sensor und einer entsprechenden elektronischen Auswerteeinheit und gleichzeitig eine hochwertige elektrische Kontaktierung. Die physikalischen Eigenschaften des Kupfers begünstigen die mechanische Kontaktierung durch Quetschen, Löten oder ähnliche Verbindungstechniken. Aufgrund der Kupferummantelung ist der elektrische Leiter 26 im Anschlussbereich korrosionsbeständiger als herkömmliche elektrische Stahlleiter. Andererseits ermöglicht der mechanisch stabilere Stahlkern eine Kontaktierung, die unter hohen mechanischen und thermischen Belastungen beständig ist. Um die synergetischen Effekte der Kombination von Stahl und Kupfer zu erzielen, können die Leiterenden 27, 28 des elektrischen Leiters 26 vorteilhaft als Litze oder als Massiveinzelleiter ausgeführt werden. Erfindungsgemäß ist vorzusehen, dass die Materialstärke des Stahls - also eines einzelnen oder mehrerer Kerne bei einer Litze - ausreichend groß ist. Daneben kann vorgesehen sein, dass der Kupferanteil (d.h. die Stärke der Kupferummantelung) groß genug dimensioniert ist, um auch beim Quetschen der Leitung eine ausreichende Verformung der Kupferlitze zu ermöglichen. Um die Zusammenhänge zwischen dem inneren Durchmesser des Stahlkerns und der Stärke der Kupferummantelung zu veranschaulichen, werden nachfolgend einige Ausführungsbeispiele anhand konkreter Zahlenwerte beschrieben. Es ist jedoch anzumerken, dass die Vorteile der vorliegenden Erfindung auch dann erzielt werden können, wenn andere Materialien als Kupfer und Stahl, welche ähnliche physikalische Eigenschaften aufweisen, verwendet werden. Zudem sind Abweichungen von den angegebenen Zahlenwerten in einem gewissen Umfang möglich, ohne dass auf die Vorteile der vorliegenden Erfindung verzichtet werden muss.

Fig. 4 (a) zeigt beispielhaft einen Querschnitt durch einen elektrische Einzelleiter 30 einer Litze, welcher für eine elektrische Kontaktierung gemäß der vorliegenden Erfindung verwendet werden kann. Der Einzelleiter weist einen Kern 31 mit einem Durchmesser D1 und einen Mantel 32 mit einem Durchmesser D2 auf. Der Kern kann vorteilhaft aus Stahl und der Mantel aus Kupfer oder einer Kupferlegierung sein. Der Mantel kann für die meisten Anwendungen sehr dünn ausgeführt werden, so dass sich ein Verhältnis von D1 zu (D2-D1) von mehr als 10 zu 1 ergibt. Die Eigenschaften der Materialien und für den Kern und den Mantel wurden bereits unter Bezugnahme auf Fig. 1 beschrieben und gelten entsprechend für den Einzelleiter aus Fig. 4 (a).

Fig. 4 (b) zeigt beispielhaft einen Querschnitt durch einen elektrischen Leiter 26 gemäß einer vorteilhaften Ausgestaltung der Erfindung. Die nachfolgend erläuterte Ausgestaltung des Leiters 26 befindet sich mindestens in einem letzten Abschnitt des elektrischen Leiters. Darüber hinaus kann erfindungsgemäß ein elektrischer Leiter 26 beliebiger Länge bereitgestellt werden, welcher über die gesamte Länge die entsprechenden vorteilhaften Eigenschaften (d.h. die entsprechenden Querschnitte) aufweist. Die Kriterien, welche der Dimensionierung der erfindungsgemäßen Litze zugrunde zu legen sind, umfassen vorteilhaft die folgenden Aspekte: die Beständigkeit gegen Biegewechsel, die Schlagfestigkeit gegen Kabelbindermontage, die Schwingfestigkeit, die Dichtheit der Umspritzung eines Sensors oder Aktuators mit der erfindungsgemäßen Kontaktierung und ihren geringen Kontaktübergangswiderstand. Gemäß Fig. 4 (b) besteht der elektrische Leiter 26 an einem Ende (27 oder 28 gemäß der Darstellung aus Fig. 2) aus einer Litze 300, welche eine Mehrzahl (z.B. vorteilhaft 19 oder 20) Einzelleiter 30 mit je einem Kern 31 aus einem mechanisch robusten Material, wie z.B. Stahl, und einem dünnen Mantel 32 aus einem weicheren Material, wie z.B. Kupfer, aufweist. Der elektrische Leiter 26 hat vorteilhaft einen Durchmesser D3 von zwischen z.B. 4 mm und 4.5 mm. Die Litze 300 hat mit Isolation 34 einen Durchmesser D4 von etwa 1.5 mm. Der Durchmesser D5 der Litze selbst beträgt etwa 1 mm.

Die Litze 300 befindet sich zum Beispiel in dem Kontaktelement 22, 23 (in Fig. 3 dargestellt) zur Bereitstellung der erfindungsgemäßen elektrischen Kontaktierung. Durch mechanischen Druck sind das Kontaktelement 22, welches aus Stahl, Aluminium, Kupfer oder Ähnlichem bestehen kann und das Leiterende 27 verformt und so in eine enge mechanische und elektrische Verbindung gebracht. Der Kupfermantel 32 der Einzelleiter 30 der Litze 300 kann aufgrund des äußeren Drucks, welcher über das Kontaktelement 22 ausgeübt wird, aus einem etwa kreisförmigen Querschnitt verformt werden. Der Kern 31 der Einzelleiter 30 der Litze bleibt dagegen nahezu unverändert. Dieser vorteilhafte Effekt der Erfindung wird dadurch bewirkt, dass der Kern 31 eine höhere mechanische Stabilität aufweist als der Kupfermantel 32. Zum anderen sind die Durchmesser der erfindungsgemäßen Litze 300 so gewählt, dass der vorgenannte Effekt eintreten kann. Die bessere elektrische Leitfähigkeit des Kupfermantels 32 wirkt sich insoweit positiv aus, dass ein geringer Kontaktwiderstand zwischen dem Kontaktelement 22 und der Litze 300 entsteht. Bei der Kontaktierung sind neben dem Crimpen Alternativen denkbar, wie z.B. das Schweißen, welches insbesondere für den Stahlkern 31 vorteilhaft in Frage kommt. Daneben kann auch mittels "Hot Staking" das sogenannte Widerstandsschweißen erfolgen. Durch Aufbringen von Druck über eine Schraube oder Ähnliches ergeben sich nach dem Prinzip der Lüsterklemme weitere vorteilhafte Kontaktierungsmöglichkeiten. Ebenso sind Lösungen vorstellbar, bei denen eine oder mehrere Verbindungstechniken mit anderen Verbindungstechniken kombiniert werden. So ist es z.B. vorstellbar, dass die Kontaktierung zum Teil gelötet oder geschweißt wird und zusätzlich über einen Crimp- oder einen Schraubkontakt mechanische Stabilität erzeugt wird. Alle Kontaktierungsformen profitieren von der erfindungsgemäßen Ausgestaltung.

Die vorstehenden Erläuterungen betreffen überwiegend einen Kern und einen Mantel einer elektrisch-mechanischen Verbindung. Die Vorteile der vorliegenden Erfindung sind jedoch ebenfalls durch den Einsatz mehrere Kerne (z.B. als mehrere Innenleiter), oder eines Kerns mit mehreren Mänteln in Form von einer Abfolge von Schichten zu erzielen. Entscheiden ist die Auswahl der Materialien für den Kern und den Mantel. Je nach Art der Kontaktierung können die Materialien auch genau umgekehrt gewählt werden, so dass die geringere thermische Leitfähigkeit des Kerns stattdessen durch den Mantel erfüllt wird. Anstelle einer Litze kann auch ein Massiveinzelleiter gewählt werden.

## Patentansprüche

1. Vorrichtung welche einen Sensor oder Aktuator und Koppelmittel zum elektrischen und mechanischen Ankoppeln des Sensors oder Aktuators umfasst, wobei die Koppelmittel einen elektrischen Einzelleiter (30) mit einem Kern (31) aus einem ersten Material und einem Mantel (32) aus einem zweiten Material umfassen und das erste Material eine geringere thermische Leitfähigkeit besitzt als das zweite Material, wobei das erste Material des elektrischen Leiters in Form eines Innenleiters ausgebildet ist, welches einen kreisrunden Querschnitt aufweist und das zweite Material als Außenleiter ausgebildet ist, welches den Innenleiter umschließt,
**dadurch gekennzeichnet, dass** der Sensor (100) für den Einsatz als Sensor in einem Antiblokkiersystem zum Sensieren der Drehgeschwindigkeit von Rädern ausgestaltet ist, wobei das Verhältnis des Innenradius des Innenleiters zur Stärke des Außenleiters größer als 10:1 ist, wobei das Verhältnis zwischen 10:1 und 1000:1 ist.

2. Vorrichtung nach Anspruch 1, **dadurch gekennzeichnet, dass** das erste Material mechanisch belastbarer ist als das zweite Material.

3. Vorrichtung nach Anspruch 1 oder 2, **dadurch gekennzeichnet, dass** das erste Material einen geringeren thermischen Ausdehnungskoeffizienten aufweist als das zweite Material.

4. Vorrichtung nach einem der vorstehenden Ansprüche, **dadurch gekennzeichnet, dass** das zweite Material eine bessere elektrische Leitfähigkeit aufweist als das erste Material.

5. Vorrichtung nach einem der vorstehenden Ansprüche, **dadurch gekennzeichnet, dass** der Sensor (100) mindestens teilweise mit einer Umspritzmasse zur Erhöhung der mechanischen Stabilität der Kopplungsmittel umgeben ist.

6. Vorrichtung nach einem der vorstehenden Ansprüche, **dadurch gekennzeichnet, dass** das erste Material Stahl und das zweite Material Kupfer oder eine Kupferlegierung ist.

7. Vorrichtung nach einem der vorstehenden Ansprüche, **gekennzeichnet, durch** ein Kupplungselement, insbesondere eine Kupplungsdose, eine Kupplungsbuchse oder eine Kupplungsstecker zum weiteren elektrischen und mechanischen Koppeln des elektrische Leiters mit einer Elektronik für den Betrieb des Sensors oder Aktuators.

## Claims

1. Device which comprises a sensor or actuator and coupling means for electrically and mechanically coupling the sensor or actuator, wherein the coupling means comprise an individual electrical conductor (30) having a core (31) made of a first material and a jacket (32) made of a second material, and the first material has lower thermal conductivity than the second material wherein the first material of the electrical conductor is embodied in the form of an internal conductor which has a circular cross section, and the second material is embodied as an external conductor which encloses the internal conductor, **characterized in that** the sensor (100) is designed for use as a sensor in an anti-lock brake system, for sensing the rotational speed of wheels, wherein the ratio of the internal radius of the internal conductor to the thickness of the external conductor is greater than 10:1, wherein the ratio is between 10.1 and 1000:1.

2. Device according to Claim 1, **characterized in that** the first material can be mechanically loaded more than the second material.

3. Device according to Claim 1 or 2, **characterized in that** the first material has a lower thermal coefficient of expansion than the second material.

4. Device according to one of the preceding claims, **characterized in that** the second material has better electrical conductivity than the first material.

5. Device according to one of the preceding claims, **characterized in that** the sensor (100) is at least partially surrounded with an injection molded encapsulation for increasing the mechanical stability of the coupling means.

6. Device according to one of the preceding claims, **characterized in that** the first material is steel and the second material is copper or a copper alloy.

7. Device according to one of the preceding claims, **characterized by** a coupling element, in particular a coupling socket, a coupling connector or a coupling plug for further electrical and mechanical coupling of the electrical conductor to an electronic system for operating the sensor or actuator.

## Revendications

1. Dispositif, lequel comprend un capteur ou un actionneur et des moyens d'accouplement, destinés à l'accouplement électrique et mécanique du capteur ou de l'actionneur,
les moyens d'accouplement comprenant un conducteur électrique (30) individuel, pourvu d'une âme (31) en une première matière et d'une gaine (32) en une deuxième matière et la première matière faisant preuve d'une conductibilité thermique inférieure à celle de la deuxième matière,
la première matière du conducteur électrique étant conçue sous la forme d'un conducteur interne, lequel comporte une section transversale circulaire et la deuxième matière étant conçue sous la forme d'un conducteur externe, lequel entoure le conducteur interne, **caractérisé en ce que** le capteur (100) est conçu pour une utilisation en tant que capteur dans une système antiblocage, destiné à capter la vitesse de rotation de roues,
le rapport du rayon interne du conducteur interne à l'épaisseur du conducteur externe étant supérieur à 10 : 1, le rapport étant compris entre 10 : 1 et 1000 : 1.

2. Dispositif selon la revendication 1, **caractérisé en ce que** la première matière supporte une charge mécanique supérieure à celle de la deuxième matière.

3. Dispositif selon la revendication 1 ou 2, **caractérisé en ce que** la première matière fait preuve d'un coefficient de dilatation thermique plus faible que celui de la deuxième matière.

4. Dispositif selon l'une quelconque des revendications précédentes, **caractérisé en ce que** la deuxième matière fait preuve d'une meilleure conductibilité électrique que la première matière.

5. Dispositif selon l'une quelconque des revendications précédentes, **caractérisé en ce que** le capteur (100) est entouré au moins en partie d'une masse d'enrobage par injection, destinée à augmenter la stabilité mécanique des moyens d'accouplement.

6. Dispositif selon l'une quelconque des revendications précédentes, **caractérisé en ce que** la première matière est de l'acier et la deuxième matière est du cuivre ou un alliage de cuivre.

7. Dispositif selon l'une quelconque des revendications précédentes, **caractérisé par** un élément d'accouplement, notamment une prise d'accouplement, un manchon d'accouplement ou un connecteur d'accouplement pour l'accouplement électrique et mécanique ultérieur du conducteur électrique avec un système électronique destiné à faire fonctionner le capteur ou l'actionneur.
